# EUROPEAN PATENT SPECIFICATION

(11) **EP 1 710 514 B1**
(45) Date of publication and mention of the grant of the patent: **28.06.2017**
(21) Application number: 05703980.2
(22) Date of filing: 21.01.2005
(51) Int. Cl.: F24F 1/00

(54) **CEILING-HANGED AIR CONDITIONER**
AN DER DECKE AUFGEHÄNGTER LUFTKLIMATISIERER
CONDITIONNEUR D'AIR SUSPENDU A UN PLAFOND

(30) Priority: 22.01.2004 JP 2004013853
(43) Date of publication of application: 11.10.2006
(73) Proprietor: SANYO ELECTRIC CO., LTD., Moriguchi-shi, Osaka (JP)
(72) Inventor: TAKAHASHI, Kazuo, Ota-shi, Gunma 373-0036 (JP); TAMURA, Takaaki, Gunma 370-0533 (JP); FUKUSHIMA, Toshio, Gunma 373-0813 (JP); OHYACHI, Kojiro, Gunma 370-0533 (JP); NAKAYAMA, Toshio, Gunma 376-0011 (JP); KITAZUMI, Kazushige, Tokyo 113-0021 (JP); NAMIOKA, Ken, Chiba 260-0852 (JP); SEKIYA, Ryoichi, Gunma 3720-024 (JP)
(74) Representative: Glawe, Delfs, Moll
(86) International application number: PCT/JP2005/000759
(87) International publication number: WO 2005/071323

(56) References cited:
- JP-A- 5 106 865
- JP-A- 6 002 884
- JP-A- 7 019 518
- JP-A- 9 042 751
- JP-A- 9 042 751
- JP-A- 10 274 425
- JP-A- 2002 206 778
- JP-Y2- 3 003 871
- JP-Y2- 61 043 156

## Description

### Technical Field

The present invention relates to a ceiling suspension type air conditioner suspended from the ceiling.

### Background Art

A built-in type air conditioner has been most popular among ceiling suspension type air conditioners each having a ventilation function. However, this built-in type ceiling suspension type air conditioner has such a drawback that when it is set up in an existing building, a high construction cost and a long construction period are needed. Furthermore, in addition to the above-described ceiling suspension type air conditioner, such a ceiling suspension type air conditioner that a total enthalpy heat exchanger is located at a different place has been also proposed. However, this type of air conditioner has a problem that air different in air quality, temperature, humidity, etc. from air blown out from the air blow-out port of the air conditioner is blown out from the total enthalpy heat exchanger, so that unevenness occurs in indoor air.

Furthermore, there has been also proposed an air conditioner including an air-conditioner main body, and a total enthalpy heat exchanger whose main body is integrated with the air-conditioner main body (for example, Patent Document 1)

In this case, outdoor air which is heat-exchanged in the main body of the total enthalpy heat exchanger is introduced to the primary side of an indoor heat exchanger of the air-conditioner main body. At the primary side, the outdoor air and indoor air are mixed and heat-exchanged with each other, and then blown out from the blow-out port of the air-conditioner main body.

Patent Document 1: Utility Model Examined Publication No. Hei-3-3871 JP10274425 discloses the preamble of claim 1.

### Disclosure of the Invention

### Problem to be solved by the Invention

However, when the outdoor air heat-exchanged in the main body of the total enthalpy heat exchanger is introduced to the primary side of the indoor heat exchanger of the air-conditioner main body, the capacity of an indoor air blower of the air-conditioner main body runs short and thus a sufficient amount of circulating air is not achievable. Accordingly, there is a problem that fresh air quality is not achieved and temperature distribution performance is lowered.

Therefore, an object of the present invention is to solve the problem of the prior art described above, and has an object to provide a ceiling suspension type air conditioner in which a sufficient amount of circulating air can be achieved, whereby fresh air quality can be achieved and also high temperature distribution performance can be achieved.

### Means for solving the Problem

In order to attain the above object, the present invention is characterized by comprising an air-conditioner according to claim 1.

In this case, the total enthalpy heat exchanger main body may be disposed at the rear side of the air-conditioner main body. The air blow-out port of the total enthalpy heat exchanger main body may be disposed so as to be proximate to and above the air blow-out port of the air-conditioner main body. The height of the air-conditioner main body may be set to be lower than the height of the total enthalpy heat exchanger main body, and a supply air flow path of the total enthalpy heat exchanger may be provided at the upper side of the air-conditioner main body lower in height. Guide means for guiding air blown out from the air blow-out port of the total enthalpy heat exchanger main body to the air blow-out port side of the air-conditioner main body may be provided in the neighborhood of the air blow-out port of the total enthalpy heat exchanger main body.

Furthermore, an outdoor air suction and/or exhaust duct that is connected to the total enthalpy heat exchanger main body may be provided so as to be drawn out from the lower surface or back surface of the total enthalpy heat exchanger. A controller for the total enthalpy heat exchanger main body and a controller for the air-conditioner main body may be packaged in a single remote controller. A humidifier may be contained in the total enthalpy heat exchanger, and a suction grille of the air-conditioner main body and a suction grille of the total enthalpy heat exchanger may be unified into one body.

### Effect of the Invention

According to the present invention, a sufficient amount of circulating air can be achieved, whereby fresh air quality can be achieved and high temperature distribution performance can be achieved.

### Best Mode for Carrying out the invention

An embodiment of the present invention will be described hereunder with reference to the drawings.

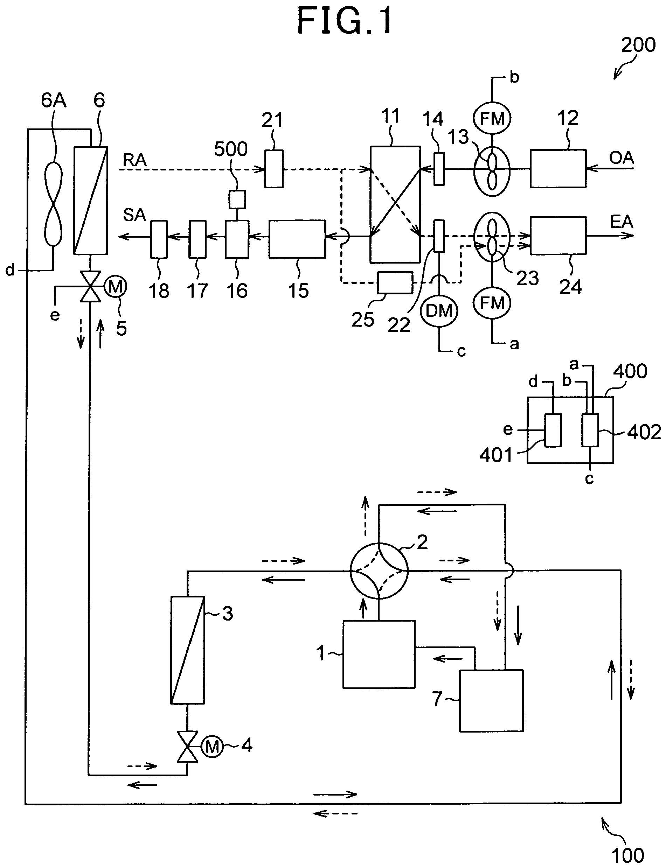

In Fig. 1, reference numeral 100 represents an air conditioner, and reference numeral 200 represents a total enthalpy heat exchanger. The air conditioner 100 is equipped with a compressor 1. An outdoor heat exchanger 3 is connected to the compressor 1 through a four-way valve 2. An indoor heat exchanger 6 is connected to the outdoor heat exchanger 3 through two mechanical valves 4 and 5. An accumulator 7 is connected to the indoor heat exchanger 6 through the four-way valve 2. The accumulator 7 is connected to the compressor 1.

In the air conditioner 100, an arrow of a solid line indicates flow of refrigerant under cooling operation. The refrigerant discharged from the compressor 1 is passed through the four-way valve 2, and reaches the outdoor heat exchanger 3 to be condensed. Then, the refrigerant is passed through the mechanical valves 4 and 5 and reaches the indoor heat exchanger 6. In the indoor heat exchanger 6, the refrigerant is supplied with air blown out from an indoor air blower 6A to be evaporated, passed through the four-way valve 2 and the accumulator 7 and then returned to the compressor 1. A room to be air-conditioned is cooled by the air blown out from the indoor air blower 6A.

An arrow of a broken line indicates flow of the refrigerant under heating operation. In this case, the refrigerant discharged from the compressor 1 is passed through the four-way valve 2 and reaches the indoor heat exchanger 6. In the indoor heat exchanger 6, the refrigerant is supplied with air blown out from an indoor air blower 6A to be condensed, and then the refrigerant is passed through the mechanical valves 5 and 4 and reaches the outdoor heat exchanger 3. The refrigerant is evaporated in the outdoor heat exchanger 3, passed through the four-way valve 2 and the accumulator 7 and then returns to the compressor 1. The room to be air-conditioned is heated by the air blown out from the indoor air blower 6A.

The total enthalpy heat exchanger 200 is constructed to have a total enthalpy heat exchanging element 11. The total enthalpy heat exchanging element 11 is constructed as follows. A flat-plate sheet is put on a folded sheet which is folded in a meandering form, and another folded sheet whose folding direction is different from that of the former folded sheet is superposed on the flat-plate sheet. These pairs of the folded sheet and the flat-plate sheet are successively laminated to thereby construct the total enthalpy heat exchanging element 11. Outdoor air is introduced into the total enthalpy heat exchanging element 11, and also exhaust air (indoor air) from the room being air-conditioned is also supplied to the total enthalpy heat exchanging element 11. After the indoor air and the outdoor air are heat-exchanged with each other, the outdoor air is supplied to the room being air-conditioned, and the indoor air is exhausted to the outside of the room being air-conditioned. Here, the outdoor air passes through an air supply duct 12, an air supply fan 13 and an outdoor filter 14 and then reaches the total enthalpy heat exchanging element 11. Subsequently, the outdoor airpasses from the total enthalpy heat exchanging element 11 through a supply air flow path 15, a humidifier 16, an air blow-out flap 17 and an air blow-out louver 18, and then the outdoor air is supplied to the room being air-conditioned. The humidifier 16 is connected to a humidifying tank 500. If water is directly supplied to the humidifying tank 500, the humidifying water would be successively supplied to the humidifier 16.

The indoor air from the room being examined passes through a suction grille 21 and reaches the total heat enthalpy heat exchanger 11. Furthermore, the indoor air passes from the total enthalpy heat exchanging element 11 through a dumper 22, an exhaust fan 23 and an exhaust duct 24 to the outside of the room. The dumper 22 functions to freely shut off the air flow path. When the dumper 22 shuts of the air flow path, the indoor air passing through the suction grille 21 bypasses the total enthalpy heat exchanging element 11 and reaches an exhaust fan 23 through a normal ventilation air flow path 25. Then, the indoor air is exhausted through an exhaust duct 24 to the outside of the room.

A remote controller 400 controls the operation of the air conditioner 100. The remote controller 400 is constructed by packaging a controller 401 for the main body 100A of the air conditioner and a controller 402 for the main body 402 of the total enthalpy heat exchanger in a single case. Here, the controller 401 controls the indoor air blower 6A, the mechanical valve 5, etc., and the controller 402 controls the exhaust fan 23, a suction fan 13, etc. By packaging the two controllers 401 and 402 in one remote controller 400 as described above, a microcomputer in the remote controller can be commonly used, so that the manufacturing cost of the remote controller can be reduced, and also the operability of the remote controller can be enhanced.

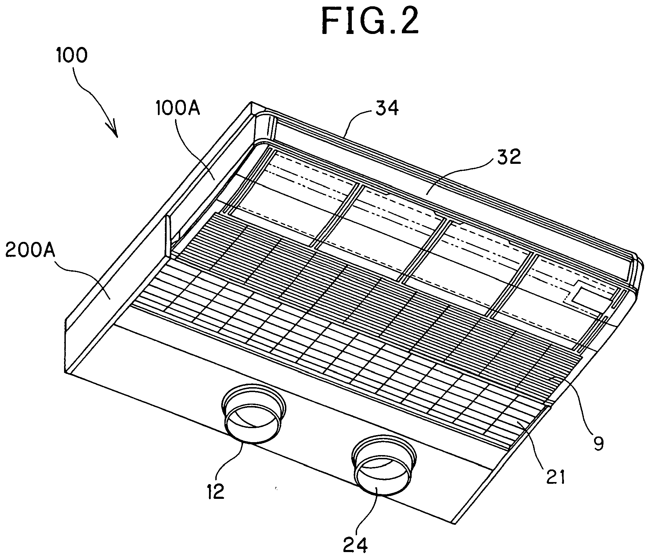

Fig. 2 is a perspective view showing the air conditioner 100 which is viewed from the lower side.

In this embodiment, the air conditioner 100 comprises an air-conditioner main body 100A suspended from the ceiling, and the main body 200A of the total enthalpy heat exchanger that adjusts the temperature of outdoor air and is joined to the rear portionof the air-conditionermainbody 100A so as tobe integrated with the air-conditioner main body 100A.

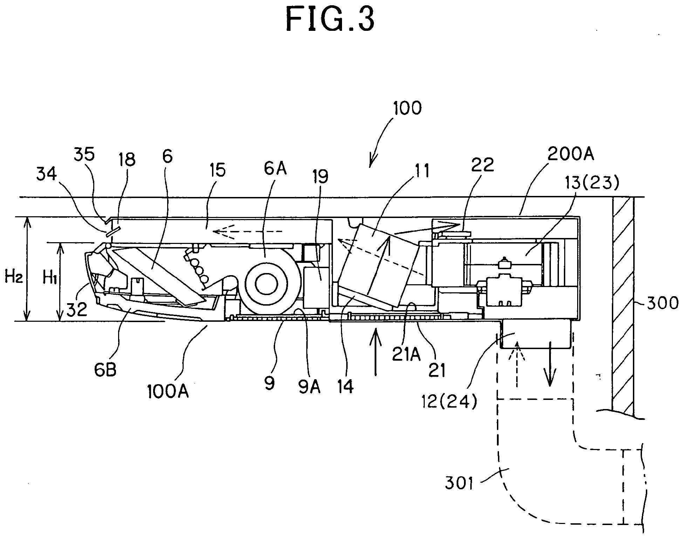

As shown in Fig. 3, the indoor heat exchanger 6, the indoor air bower 6A, a drain pan 6B, an electrical equipment box 19, etc. are disposed in the air-conditioner main body 100A. A filter 9A is disposed in the suction grille 9 of the air-conditioner main body 100A. When the air-conditioner main body 100A is operated, indoor air is sucked through the suction grille 9, and it passes through the indoor air blower 6A and reaches the indoor heat exchanger 6. The indoor air is heat-exchanged with refrigerant and then blown out through the air blow-out port 32 to the room being air-conditioned.

The total enthalpy heat exchanging element 11, the air supply fan 13, the exhaust fan 23, etc. are disposed inside the main body 200A of the total enthalpy heat exchanger, and the filter 21A is disposed in the suction grille 21. When the main body 200A of the total enthalpy heat exchanger is operated, indoor air is sucked through the suction grille 21, and it reaches the total enthalpy heat exchanging element 11. The indoor air is heat-exchanged with the outdoor air in the total enthalpy heat exchanging element 11, and then exhausted through the exhaust fan 23 to the outside of the room. On the other hand, the outdoor air reaches the total enthalpy heat exchanging element 11 through the air supply fan 13. The outdoor air is heat-exchanged with the indoor air in the total enthalpy heat exchanging element 11, and then it is passed through the supply air flow path 15 (Fig. 1), the humidifier 16, the air blow-out flap 17, the air blow-out louver 18, etc., and then blown out from the air blow-out port 34 to the roombeing air-conditioned. Air supply and exhaust ducts 12 and 24 are connected to the main body 200A of the total enthalpy heat exchanger. These air supply and exhaust ducts 12 and 24 are connected to the lower surface or back surface of the main body 200A of the total enthalpy heat exchanger.

When the dumper 22 shown in Fig. 3 is operated, the exit of the total enthalpy heat exchanging element 11 in the exhaust path for the indoor air is closed. Accordingly, the indoor air bypasses the total enthalpy heat exchanging element 11, and reaches the exhaust fan 23 through the normal ventilation air flow path 25 (see Fig. 1). Thereafter, the indoor air is blown out through the exhaust duct 24 to the outside of the room. In Fig. 3, illustration of the humidifier 16, the air blow-out flap 17, etc. is omitted.

In the above-described construction, the air blow-out ports 32 and 34 of the main bodies 100A and 200A are formed independently of each other. The respective air blow-out ports 32 and 34 are disposed so as to be proximate to each other so that the air blown out from the air blow-out port of the air-conditioner main body 100A and the air blown out from the air blow-out port of the main body 200A of the total enthalpy heat exchanger are freely mixed with each other at the exit of each of the air blow-out ports 32 and 34. As described above, the respective air blow-out ports 32 and 34 are independent of each other, and the air in the main body 200A of the total enthalpy heat exchanger is prevented from invading into the air-conditioner main body 100A.

According to the above construction, when the air blow-out flow rate of the air-conditioner main body 100A is set to 1000m³/h and the air suction flow rate of the main body 200A of the total enthalpy heat exchanger is set to 500m³/h, the circulating air flow amount is kept to 1500m³/h because the respective air blow-out ports 32 and 34 are independent of each other. If the supply air flow path of the main body 200A of the total enthalpy heat exchanger 200A is connected to the primary side of the heat exchanger of the air-conditioner main body 100A as in the case of the conventional construction, the circulating air flow is remarkably lower than 1500m³ even when the respective air flow amounts are set as described above, and rather the increase of the air flow amount is slight. Therefore, the circulating air amount runs short and thus fresh air quality cannot be achieved, so that the temperature distribution performance is lowered.

According to this embodiment, the air blow-out ports 32 and 34 are formed independently of each other, and thus the circulating air flow amount is increased, so that freshair quality can be achieved and high temperature distribution performance can be achieved.

As shown in Fig. 3, the height H1 of the air-conditioner main body 100A is set to be lower than the height H2 of the main body 200A of the total enthalpy heat exchanger. The supply air flow path 15 of the main body 200A of the total enthalpy heat exchanger is disposed at the upper side of the air-conditioner main body 100A lower in height. The total height of the main body 200A of the total enthalpy heat exchanger containing the supply air flow path is set to be substantially equal to the height H1 of the air-conditioner main body 100A.

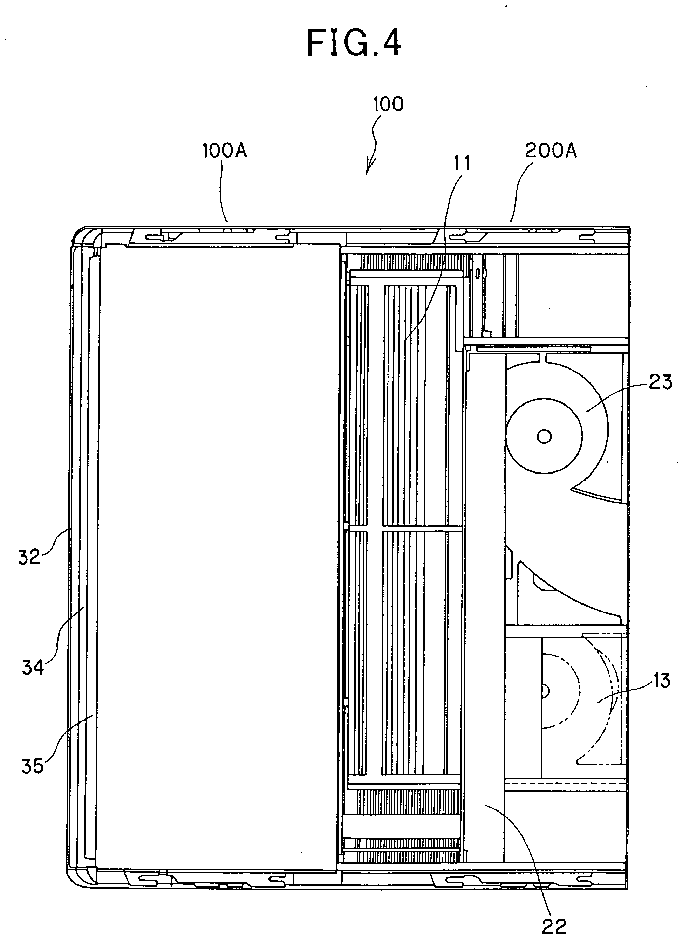

The air blow-out port 34 having substantially the same width as the supply air flow path 15 is provided at the tip portion of the air supply flow path 15. The total width of the air blow-out port 34 is set to be equal to the total width of the air blow-out port 32 of the air-conditioner main body 100A as shown in Figs. 2 and 4. Furthermore, as shown in Fig. 3, a guide vane (guide means) 35 for guiding the air blown out from the air blow-out port 34 to the air blow-out port 32 side of the air-conditioner main body 100A is provided to the air blow-out port 32 of the air-conditioner main body 100A. By properly adjusting the securing angle of the guide vane 35, the mixing effect at the exit of each of the air blow-out ports 32, 34 can be enhanced.

In the above construction, the air-conditioner main body 100A and the main body 200A of the total enthalpy heat exchanger are united into one body. Therefore, as compared with the respective main bodies are separately suspended, the suspending step may be carried out only once in the setup work. Therefore, the labor required for the setup work can be reduced. Furthermore, by making the power for the main body 200A of the suspension total enthalpy heat exchanger common to the power for the air-conditioner main body 100A at the shipping time, an electrical work may be carried out only once in the setup work. Therefore, the labor required for the work can be reduced, and the working cost can be suppressed to a remarkable low level. Furthermore, as compared with the conventional built-in type, an extra work for a roof space is unnecessary.

Since the air blow-out port 32 of the ceiling suspension air-conditioner main body 100A and the air blow-out port 34 of the main body 200A of the suspension total enthalpy heat exchanger are disposed in proximity to each other, the air streams are mixed with each other immediately after air is blown out. Therefore, unevenness in temperature in the room can be suppressed. Furthermore, unevenness in air quality (the supplied outdoor air and the existing indoor air) can be reduced. By designing the ceiling suspension type air conditioner 100 as an all-in-one unit, for example, the remote controller 400 can be designed as a single body, so that the operability can be enhanced and also the manufacturing cost of the remote controller can be reduced.

In the above-described air conditioner 100, the air supply/exhaust ducts 12 and 25 are drawn out from the lower surface of the main body 200A of the total enthalpy heat exchanger. Therefore, when a wall surface 300 exists at the rear side of the air conditioner 100, the ducts can be drawn to the rear side by providing only one elbow to each of the ducts. According to this construction, not only the duct drawing work can be easily performed, but also the air conditioner 100 can be set up in proximity to the wall surface 300, so that it makes a better show.

If the humidifier 16 is disposed in the main body 200A of the total enthalpy heat exchanger, water supply can be easily performed because it is exposed to the room.

As described above, the present invention has been described on the basis of the embodiment. However, it is needless to say that the present invention is not limited to this embodiment. For example, in the above-described embodiment, the air blow-out ports 32 and 34 are disposed at the upper and lower sides . However, the upper and lower arrangement may be inverted. Furthermore, the air blow-out port 34 may be disposed so as to surround the air blow-out port 32. The main body 200A of the total enthalpy heat exchanger is joined to the rear portion of the air conditioner main body 100A, however, the present invention is not limited to this embodiment. For example, the main body 200A of the total enthalpy heat exchanger may be joined to the side portion of the air conditioner main body 100A. Furthermore, as shown in Fig. 2, the suction grille 2 of the air-conditioner main body 100A and the suction grille 9 of the main body 200A of the total enthalpy heat exchanger are provided separately from each other. However, the suction paths connected to these grilles are integrated into a single suction path and the suction grilles are integrated into a single grille, whereby the service checkout may be carried out only once, and thus the labor hour for the service can be saved. In addition, by making the suction grille common, the cost can be reduced.

### Brief description of the Drawings

[Fig. 1 is a circuit diagram showing an embodiment of a suspension type air conditioner according to the present invention.
[Fig. 2] is a perspective view showing the suspension type air conditioner which is viewed from the lower side.
[Fig. 3] is a cross-sectional view showing the suspension type air conditioner.
[Fig. 4] is a plan view showing the suspension type air conditioner.

### Description of Reference Numerals

- 6: indoor heat exchanger
- 6A: indoor air blower
- 11: total enthalpy heat exchanging element
- 13: supply fan
- 15: supply air flow path
- 23: exhaust fan
- 32, 34: air blow-out port
- 35: guide vane (guide means)
- 100A: air conditioner main body
- 200A: main body of total enthalpy heat exchanger

## Claims

1. A ceiling suspension type air conditioner comprising:
an air-conditioner main body (100A) suspendable from a ceiling; and
a total enthalpy heat exchanger main body (200A) integrated with the air-conditioner main body, wherein air blow-out ports (32, 34) of the respective main bodies are formed independently of each other, and disposed in proximity to each other so that air blown out from the air blow-out port of the air-conditioner main body and air blown out from the air blow-out port of the total enthalpy heat exchanger main body are freely mixed with each other at the exits of the respective air blow-out ports, **characterized in that** a supply air flow path (15) of the total enthalpy heat exchanger having substantially the same width as the air blow-out port (32) of the air-conditioner main body is provided on the air-conditioner main body, the air blow-out port (34) of the total enthalpy heat exchanger main body at a tip portion of the air supply flow path has substantially the same width as the air blow-out port of the air-conditioner main body and
guide means (35) for guiding air blown out from the air blow-out port of the total enthalpy heat exchanger main body to the air blow-out port side of the air-conditioner main body are provided in the neighborhood of the air blow-out port of the total enthalpy heat exchanger main body so as to enhance a mixing effect at the exits of the respective air blow-out ports.

2. The ceiling suspension type air conditioner according to claim 1, wherein the total enthalpy heat exchanger main body is disposed at the rear side of the air-conditioner main body.

3. The ceiling suspension type air conditioner according to claim 1, wherein the air blow-out port of the total enthalpy heat exchanger main body is disposed so as to be proximate to and above the air blow-out port of the air-conditioner main body.

4. The ceiling suspension type air conditioner according to claim 1, wherein the height of the air-conditioner main body is set to be lower than the height of the total enthalpy heat exchanger main body, and a supply air flow path of the total enthalpy heat exchanger is formed at the upper side of the air-conditioner main body lower in height so that the height of the total enthalpy heat exchanger main body is set to be equal to the height of the air-conditioner main body and the supply air flow path.

5. The ceiling suspension type air conditioner according to claim 1, further comprising an outdoor air suction and/or exhaust duct (12, 24) that is connected to the total enthalpy heat exchanger main body so as to be drawn out from the lower surface or back surface of the total enthalpy heat exchanger.

6. The ceiling suspension type air conditioner according to claim 1, wherein a controller (402) for the total enthalpy heat exchanger main body and a controller (401) for the air-conditioner main body are packaged in a single remote controller (400).

7. The ceiling suspension type air conditioner according to claim 1, further comprising a humidifier (16) contained in the total enthalpy heat exchanger.

8. The ceiling suspension type air conditioner according to claim 1, wherein a suction grille (21) of the air-conditioner main body and a suction grille (9) of the total enthalpy heat exchanger are unified into one body.

## Patentansprüche

1. Klimaanlage vom Deckenaufhängungstyp, die Folgendes umfasst:
einen Klimaanlagenhauptkörper (100A), der an einer Decke aufhängbar ist; und
einen Gesamtenthalpie-Wärmetauscherhauptkörper (200A), der mit dem Klimaanlagenhauptkörper integriert ist,
wobei Luftausblasöffnungen (32, 34) der jeweiligen Hauptkörper unabhängig voneinander gebildet sind und benachbart zueinander angeordnet sind, sodass Luft, die von der Luftausblasöffnung des Klimaanlagenhauptkörpers ausgeblasen wird, und Luft, die von der Luftausblasöffnung des Gesamtenthalpie-Wärmetauscherhauptkörpers ausgeblasen wird, an den Ausgängen der jeweiligen Luftausblasöffnungen frei miteinander vermischt wird,
**dadurch gekennzeichnet, dass** ein Zufuhr-Luftströmungsweg (15) des Gesamtenthalpie-Wärmetauschers, der im Wesentlichen dieselbe Breite wie die Luftausblasöffnung (32) des Klimaanlagenhauptkörpers aufweist, an dem Klimaanlagenhauptkörper bereitgestellt ist, wobei die Luftausblasöffnung (34) des Gesamtenthalpie-Wärmetauscherhauptkörpers an einem Spitzenbereich des Luftzufuhrströmungsweges im Wesentlichen dieselbe Breite wie die Luftausblasöffnung des Klimaanlagenhauptkörpers aufweist und
Leitmittel (35) zum Leiten von Luft, die aus der Luftausblasöffnung des Gesamtenthalpie-Wärmetauscherhauptkörpers zu der Luftausblasöffnungsseite des Klimaanlagenhauptkörpers ausgeblasen wurde, in der Nachbarschaft der Luftausblasöffnung des Gesamtenthalpie Wärmetauscherhauptkörpers bereitgestellt sind, um so einen Mischungseffekt an den Ausgängen der jeweiligen Luftausblasöffnungen zu verbessern.

2. Klimaanlage vom Deckenaufhängungstyp gemäß Anspruch 1, wobei der Gesamtenthalpie-Wärmetauscherhauptkörper an der Rückseite des Klimaanlagenhauptkörpers angeordnet ist.

3. Klimaanlage vom Deckenaufhängungstyp gemäß Anspruch 1, wobei die Luftausblasöffnung des Gesamtenthalpie-Wärmetauscherhauptkörpers so angeordnet ist, dass sie nahe und über der Luftausblasöffnung des Klimaanlagenhauptkörpers angeordnet ist.

4. Klimaanlage vom Deckenaufhängungstyp gemäß Anspruch 1, wobei die Höhe des Klimaanlagenhauptkörpers niedriger als die Höhe des Gesamtenthalpie-Wärmetauscherhauptkörpers festgesetzt ist und ein Zufuhr-Luftströmungsweg des Gesamtenthalpie-Wärmetauschers an der oberen Seite des Klimaanlagenhauptkörpers mit niedrigerer Höhe gebildet ist, sodass die Höhe des Gesamtenthalpie-Wärmetauscherhauptkörpers gleich der Höhe des Klimaanlagenhauptkörpers und des Zufuhr-Luftströmungsweges festgesetzt ist.

5. Klimaanlage vom Deckenaufhängungstyp gemäß Anspruch 1, die weiter einen Außenluftansaug- und/oder Ausstoßkanal (12, 24) umfasst, der mit dem Gesamtenthalpie-Wärmetauscherhauptkörper so verbunden ist, dass er aus der unteren Oberfläche oder Rückoberfläche des Gesamtenthalpie-Wärmetauschers herausgeführt ist.

6. Klimaanlage vom Deckenaufhängungstyp gemäß Anspruch 1, wobei eine Steuerung (402) für den Gesamtenthalpie-Wärmetauscherhauptkörper und eine Steuerung (401) für den Klimaanlagenhauptkörper in einer einzigen Fernsteuerung (400) zusammengefasst sind.

7. Klimaanlage vom Deckenaufhängungstyp gemäß Anspruch 1, die weiter einen Befeuchter (16), der in dem Gesamtenthalpie-Wärmetauscher enthalten ist, umfasst.

8. Klimaanlage vom Deckenaufhängungstyp gemäß Anspruch 1, wobei ein Ansauggitter (21) des Klimaanlagenhauptkörpers und ein Ansauggitter (9) des Gesamtenthalpie-Wärmetauschers zu einem Körper vereint sind.

## Revendications

1. Appareil de conditionnement d'air du type suspendu au plafond, comprenant :
un corps principal de conditionneur (100A) capable d'être suspendu depuis un plafond ; et
un corps principal d'échangeur de chaleur à enthalpie totale (200A) intégré avec le corps principal de conditionneur,
dans lequel des orifices de soufflage d'air (32, 34) des corps principaux respectifs sont formés indépendamment l'un de l'autre et disposés à proximité l'un de l'autre de telle façon que l'air soufflé hors de l'orifice de soufflage d'air du corps principal de conditionneur et l'air soufflé hors de l'orifice de soufflage d'air de l'échangeur de chaleur à enthalpie totale sont librement mélangés l'un avec l'autre aux sorties des orifices de soufflage d'air respectifs,
**caractérisé en ce que**
un trajet d'écoulement d'air d'alimentation (15) de l'échangeur de chaleur à enthalpie totale ayant sensiblement la même largeur que l'orifice de soufflage d'air (32) du corps principal d'appareil est prévu sur le corps principal de conditionneur, l'orifice de soufflage d'air (34) du corps principal d'échangeur de chaleur à enthalpie totale au niveau d'une portion terminale du trajet d'écoulement d'alimentation d'air a sensiblement la même largeur que l'orifice de soufflage d'air du corps principal de conditionneur, et
des moyens de guidage (35) pour guider l'air soufflé hors de l'orifice de soufflage d'air du corps principal d'échangeur de chaleur à enthalpie totale vers le côté de l'orifice de soufflage du corps principal de conditionneur sont prévus dans le voisinage de l'orifice de soufflage d'air du corps principal d'échangeur de chaleur à enthalpie totale de manière à renforcer un effet de mélange au niveau des sorties des orifices de soufflage d'air respectifs.

2. Appareil de conditionnement d'air du type suspendu au plafond selon la revendication 1, dans lequel le corps principal d'échangeur de chaleur à enthalpie totale est disposé sur le côté arrière du corps principal de conditionneur.

3. Appareil de conditionnement d'air du type suspendu au plafond selon la revendication 1, dans lequel l'orifice de soufflage d'air du corps principal d'échangeur de chaleur à enthalpie totale est disposé de manière à se trouver à proximité et au-dessus de l'orifice de soufflage d'air du corps principal de conditionneur.

4. Appareil de conditionnement d'air du type suspendu au plafond selon la revendication 1, dans lequel la hauteur du corps principal de conditionneur est choisie inférieure à la hauteur du corps principal d'échangeur de chaleur à enthalpie totale, et un trajet d'écoulement d'air d'alimentation de l'échangeur de chaleur à enthalpie totale est formé sur le côté supérieur du corps principal de conditionneur à une hauteur telle que la hauteur du corps principal d'échangeur de chaleur à enthalpie totale est choisie égale à la hauteur du corps principal de conditionneur et du trajet d'écoulement d'air d'alimentation.

5. Appareil de conditionnement d'air du type suspendu au plafond selon la revendication 1, comprenant en outre un conduit d'aspiration d'air extérieur et/ou un conduit d'échappement (12, 24) qui est connecté au corps principal d'échangeur de chaleur à enthalpie totale de manière à être aspiré depuis la surface inférieure ou la surface dorsale de l'échangeur de chaleur à enthalpie totale.

6. Appareil de conditionnement d'air du type suspendu au plafond selon la revendication 1, dans lequel un contrôleur (402) pour le corps principal d'échangeur de chaleur à enthalpie total et un contrôleur (401) pour le corps principal de conditionneur sont regroupés dans un unique contrôleur à distance (400).

7. Appareil de conditionnement d'air du type suspendu au plafond selon la revendication 1, comprenant en outre un humidificateur (16) contenu dans l'échangeur de chaleur à enthalpie totale.

8. Appareil de conditionnement d'air du type suspendu au plafond selon la revendication 1, dans lequel une grille d'aspiration (21) du corps principal de conditionneur et une grille d'aspiration (9) de l'échangeur de chaleur à enthalpie totale sont réunies dans un seul corps.
